# EUROPEAN PATENT SPECIFICATION

(11) **EP 3 062 620 B1**
(45) Date of publication and mention of the grant of the patent: **28.03.2018**
(21) Application number: 14799049.3
(22) Date of filing: 31.10.2014
(51) Int. Cl.: A22C 21/00

(54) **METHOD AND SYSTEM FOR AUTOMATICALLY DEBONING POULTRY BREAST CAPS CONTAINING MEAT AND A SKELETAL STRUCTURE TO OBTAIN BREAST FILLETS THEREFROM**
VERFAHREN UND SYSTEM ZUM AUTOMATISCHEN ENTBEINEN VON GEFLÜGELBRUSTKAPPEN MIT FLEISCH UND EINER SKELETTSTRUKTUR ZUR GEWINNUNG VON BRUSTFILETS DARAUS
PROCÉDÉ ET SYSTÈME POUR DÉSOSSER AUTOMATIQUEMENT DES COUPES DE POITRINE DE VOLAILLE CONTENANT DE LA VIANDE ET UNE STRUCTURE SQUELETTIQUE POUR OBTENIR DES FILETS À PARTIR DE CELLES-CI

(30) Priority: 01.11.2013 NL 2011718; 01.11.2013 US 201361898622 P
(43) Date of publication of application: 07.09.2016
(73) Proprietor: Foodmate B.V., 3261 LK Oud-Beijerland (NL)
(72) Inventor: SLAGBOOM, Rijk, NL-3261 LK Oud-Beijerland (NL); HAZENBROEK, Jacobus Eliza, NL-3261 LK Oud-Beijerland (NL)
(74) Representative: V.O.
(86) International application number: PCT/NL2014/050756
(87) International publication number: WO 2015/065190

(56) References cited:
- EP-A1- 2 384 643
- US-A- 4 993 114
- US-A- 5 273 485

## Description

The present invention relates to a method and a system for automatically deboning poultry breast caps containing meat and a skeletal structure for obtaining breast fillets.

It is known for automatically deboning to mount poultry breast caps on mandrels and to move these mandrels by an endless conveyor through a number of processing stations. To reduce the required floor space for this equipment the conveyor is looped about spaced sprockets with straight conveyor sections extending in a vertical plane one above the other. When processing stations are arranged along both the upper and lower conveyor sections the floor space requirement can be optimized. Automatic breast cap deboners that use this principle are known from US 4557017, US 4873746 and EP 0207553. In these known methods and apparatuses the mandrels are upside down when in the lower conveyor section. It has since been found that processing breast caps when suspended upside down from mandrels and prone to gravity leads to critically complex processing stations, which is reflected in their frequent necessary maintenance and adjustment. There has been some benefit in de-skinning when the breast caps are inversed. Nonetheless de-skinning is best done in a direction from the tail end to the head end of a breast cap. However in these known conveyor systems the mandrels are conveyed over the de-skinning units with the head end of the breast cap leading, which has resulted in less than optimal de-skinning results. Also known from US 5273485 is a method of deboning poultry breast caps to obtain fillets therefrom, in which the poultry breast cap is saddled on a mandrel having a plane of symmetry in a vertical orientation for being conveyed passed a de-skinning device and filleting tools. The poultry breast caps in this known method are conveyed for skinning and filleting in a gravity neutral upright position. While in this known method de-skinning is performed from the tail end to the head end with the breast cap reversed, the breast cap is not inversed during de-skinning and cannot benefit from gravity.

Accordingly it is an object of the present invention to propose an improved method and system for automatically deboning poultry breast caps containing meat and a skeletal structure to obtain breast fillets therefrom. In particular a method and system that is economic in floor space requirements, but which keeps the mandrels in an upright position, except for de-skinning. Furthermore it is an object to perform de-skinning from the tail end to the head end. In a more general sense it is thus an object of the invention to overcome or ameliorate at least one of the disadvantages of the prior art. It is also an object of the present invention to provide alternative structures which are less cumbersome in assembly and operation and which moreover can be made relatively inexpensively. Alternatively it is an object of the invention to at least provide the public with a useful alternative.

To accomplish these objects the invention provides for a method and an system as defined by the appended claims.

In particular the method of automatically deboning poultry breast caps containing meat and a skeletal structure to obtain breast fillets therefrom, includes steps of: providing a mandrel having a plane of symmetry in vertical orientation; supporting a breast cap having a neck end and a tail end with its skeletal structure including a keel bone on top of the mandrel; holding the breast cap to the mandrel with the keel bone aligned with the plane of symmetry of the mandrel; moving the mandrel through a conveying path that extends through a substantially horizontal plane; providing a breast cutter in the conveying path; moving the mandrel through a conveying path in a direction of travel to pass the breast cutter for engagement with the meat along the keel bone; providing at least one incision along the area where the meat is attached to the keel bone; providing a breast fillet remover downstream of the breast cutter; allowing the breast fillet remover to engage between the skeletal structure on the mandrel and the meat; and separating the meat as a pair of single fillets from the skeletal structure, wherein the mandrel is being moved through the conveying path with the plane of symmetry aligned with the direction of travel. In particular the mandrel is moved through the conveying path with the neck end of the breast cap leading and the tail end trailing, and for enabling an optional step of de-skinning prior to moving the mandrel to pass the breast cutter, the mandrel within its plane of symmetry is brought into an upside-down position with the tail end of the breast cap leading for the optional step of de-skinning and is returned back again to its initial position prior to engagement of the meat with the breast cutter. With in particular the conveying path extending through a substantially horizontal plane and the plane of symmetry of the mandrels aligned with the direction of travel it is possible to perform the majority of meat processing steps with the breast caps supported in a gravity neutral position. This is also an advantage when removing single fillets from the respective sides of a breast cap. It can further be advantageous when the method further includes providing a de-skinner, and performing of the optional step of de-skinning prior to moving the mandrel to pass the breast cutter. It can then further be advantageous, when the method further includes a step of pre-cutting the neck end prior to the step of de-skinning.

When the method further comprises unloading the skeletal structure from the mandrel after separating of the meat therefrom, the mandrels can conveniently be returned to a loading section and be used again.

It may further be advantageous when the breast cutter includes a cutting implement that preferably includes a pair of spaced parallel cutting blades for providing a pair of spaced parallel incisions along the area where the meat is attached to the keel bone. This will result in the fillets being cleaner and not needing any further manual labor.

The invention also relates to a system for performing the above recited method steps. Such a system may conveniently comprise an endless conveyor arranged in a substantially horizontal plane and including a pair of substantially parallel straight sections, which are joined by opposite first and second curved sections extending about spaced first and second conveyor wheels. Such a system furthermore may comprise a conveyor chain and a plurality of mandrels entrained for movement through the conveying path in the direction of travel by the conveyor chain. The conveyor chain may preferably be of a type including individual chain links and each mandrel may then be associated with an intermediate chain link, between a leading chain link and a trailing chain link. In this manner each intermediate chain link can support a Maltese cross that is arranged to be rotatable in a vertical plane between at least two indexed positions. In such an arrangement the mandrel is advantageously fixedly connected to the Maltese cross by a shaft to extend with its plane of symmetry parallel to the plane of rotation of the Maltese cross. Inwardly extending diagonal slots in the Maltese cross are then adapted to engage detents along a bottom edge of a guide channel for guiding and supporting the conveyor chain in a straight section of the conveyor. Engagement of the detents and the diagonal slots will then cause each mandrel to turn through 180° in its plane of symmetry.

In general such systems may also be arranged to comprise a loading section for loading poultry breast caps onto mandrels and at least two compartments that are each adapted to selectively receive optional equipment, such as at least one exchangeable meat processing module. The at least one exchangeable meat processing module in particular may include a breast splitter and deboner unit, and optionally further include a de-skinner unit, arranged to be received in one of the at least two compartments in optional operative and non-operative modes. For such a proposed system the deboner unit in the direction of travel may include a bone centering device, a breast cutter, and a breast fillet remover. The bone centering device may conveniently comprises a stationary central guide for guiding breast caps in a vertical direction and a pair of centering blocks oppositely movable transverse to the direction of travel for centering wishbones in the breast caps. Also the breast cutter may include the cutting implement in the form of rotatable double circular cutting blade. The breast fillet remover preferably may include complementary first and second tunnel plates mounted for limited individual swiveling movement.

Further advantageous aspects of the invention will become clear from the appended description and in reference to the accompanying drawings, in which:
Figure 1 is an isometric view of a machine suitable for performing the method according to the invention;
Figure 2 illustrates a front portion of the machine of Figure 1;
Figure 3 shows a portion of a conveyor chain as used in the machine of Figure 1;
Figure 4 shows a detail of Figure 2 on an enlarged scale;
Figure 5 is another enlarged detail of Figure 2;
Figure 6 shows a de-skinner unit detached from the machine of Figure 1 as seen from an upstream direction;
Figure 7 shows the de-skinner unit of Figure 6 from a downstream point of view;
Figure 8 is a perspective view of a reverse side of the machine of Figure 1;
Figure 9 is an enlarged detail of the reverse side of Figure 8, but seen from an opposite direction;
Figure 10 shows a breast splitter and deboner unit as a subassembly detached from the machine of Figures 1 and 8;
Figure 11 in isolation illustrates a bone centering device of the breast splitter and deboner unit of Figure 10;
Figure 12 illustrates in elevation a breast cutter of the breast splitter and deboner unit of Figure 10;
Figure 13 illustrates in isolation a breast fillet remover of the breast splitter and deboner unit of Figure 10; and
Figure 14 shows a carcass unloader as a subassembly detached from the machine of Figures 1 and 8.

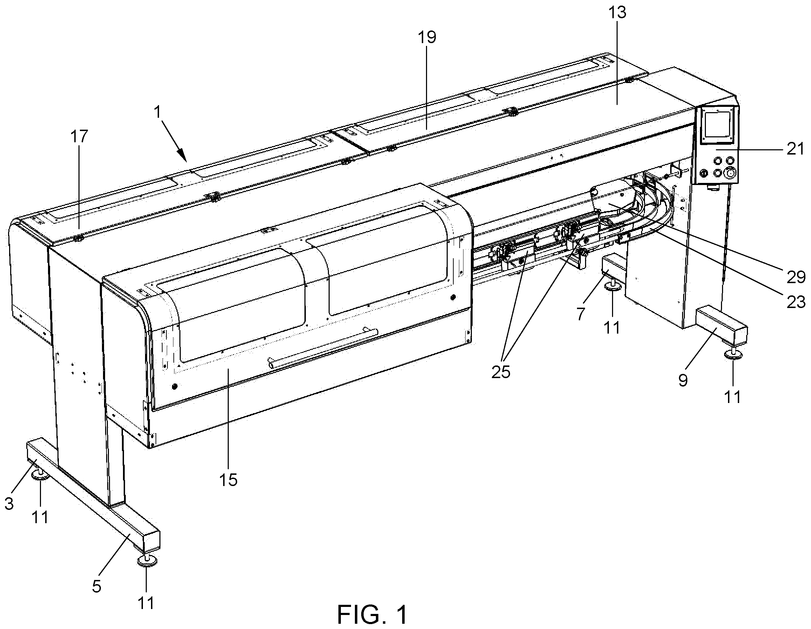

Figure 1 is a perspective view of a machine for performing the method according to the invention. The machine 1 on opposite ends is provided with legs 3, 5, 7, 9. The legs 3-9 are each provided with a pedestal 11, at least one of which is adjustable to enable leveling of the machine with respect to a workspace floor surface. The machine 1 also includes a main body 13 onto which are hinged a front door 15, a first rear door 17, and a second rear door 19. The main body 13 also is provided with a control panel 21. Arranged within the machine 1 is an endless conveyor 23 for breast cap carrying mandrels 25. A portion of the conveyor track 23, as shown in Figure 1, is exposed and not covered by a door. This section enables loading of the mandrels 25 with poultry breast caps.

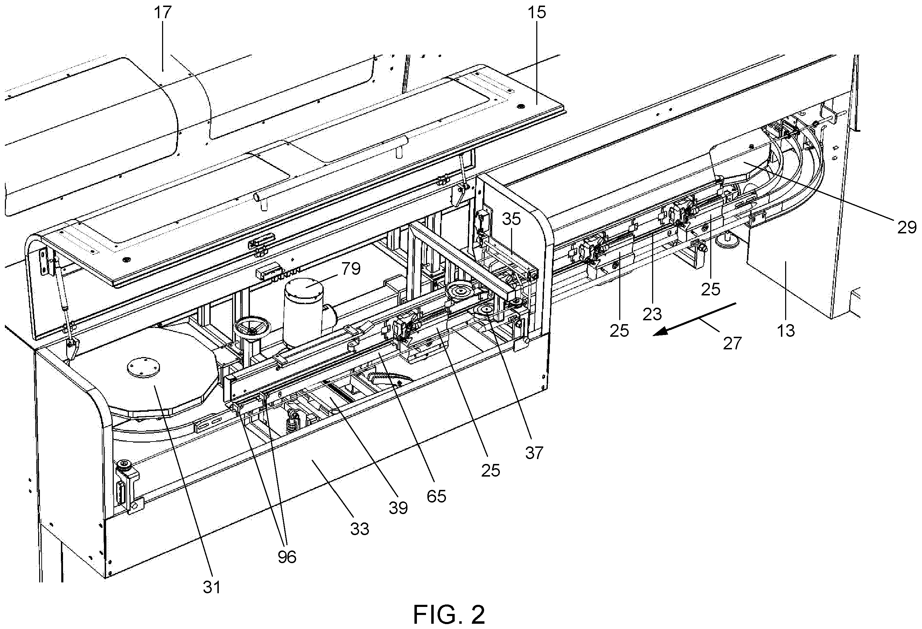

In Figure 2 the front portion of the machine 1 is shown with the front door 15 in an open position. The mandrels 25 are moved by the conveyor 23 in the direction of arrow 27. The conveyor 23 is moved by a driven conveyor wheel 29 through one return loop and is guided through an opposite return loop about an idler conveyor wheel 31. In a first compartment 33 that can be covered by the front door 15 are housed an infeed guard 35, a pre-cutter 37, and a de-skinner 39.

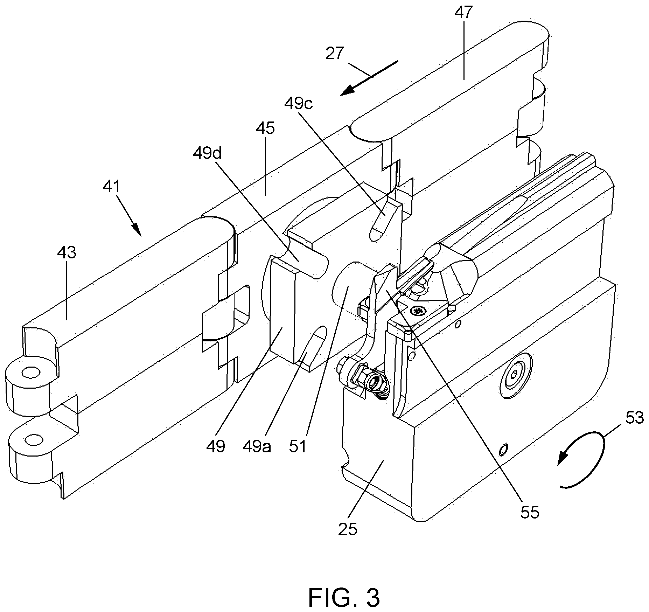

In Figure 3 a portion of a conveyor chain 41 with an associated mandrel 25 is shown on an enlarged scale. Each mandrel 25 has an associated pitch of three individual chain links 43, 45, 47. Intermediate chain link 45 is interposed between leading chain link 43 and trailing chain link 47. A succession of chain links pivotally interconnecting leading chain links 43 to respective trailing chain links 47 forms an endless conveyor chain 41. For movement in the direction of arrow 27 the conveyor chain 41 will be engaged by driven wheel 29 (as shown in Figs. 1 and 2). The intermediate chain link 45 is provided with a bearing for rotatingly supporting Maltese cross 49, which is non-rotatingly connected to the mandrel 25 through a shaft 51. When the Maltese cross 49 is rotated in the direction of arrow 53, the mandrel 25 will rotate with it in the same direction. The Maltese cross 49 is further provided with diagonal, inwardly directed slots 491, 49b, 49c, 49d for a purpose to be explained herein below. The mandrel 25 is further provided with a spring-biased clamp 55 for clampingly holding a central bone of a poultry breast cap (non-shown, but conventional). In the position of the mandrel 25 as shown in Figure 3 the breast cap meat depends from opposite sides of the mandrel 25, which defines a plane of symmetry that extends perpendicular to the shaft 51. The plane of symmetry of the mandrel 25 thus is always kept in a vertical position and a breast cap is supported on the mandrel 25 in a gravity neutral manner. This is important, so that there is no bias on the meat of the breast cap in a lateral direction. The mandrels 25 can be generally of a type as described in US 5045024.

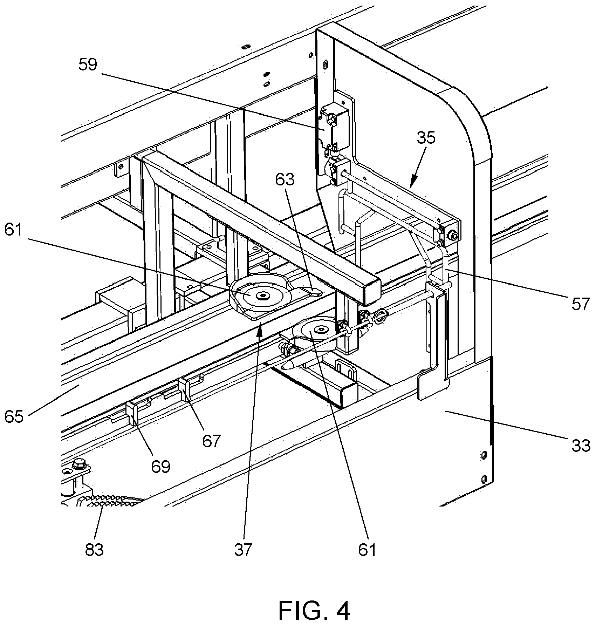

Figure 4 is an enlarged detail of an entrance side of the first compartment 33. Associated with this entrance side is the infeed guard 35, which includes a pivotally suspended contour gate 57 that normally hangs vertically. Should for some reason a poultry breast cap be wrongly positioned on a mandrel, or some other part larger than a breast cap enter the first compartment 33, then the contour gate 57 will sway out of its vertical position and interrupt the electric power to the machine through switch 59. In Figure 4 the conveyor chain and mandrels are deleted for clarity, but these will take the position as illustrated in the pre-cutter 37 which includes a pair of opposed circular cutting blades 61 and infeed guides 63. For guiding of the chain links 43, 45, 47 and the Maltese cross 49 a guide channel 65 extends along the first compartment 33 and beyond, to guide and support the conveyor chain 41 between its driven and idler wheels 29, 31. The Maltese cross 49 is guided by a bottom edge of the guide channel 65.

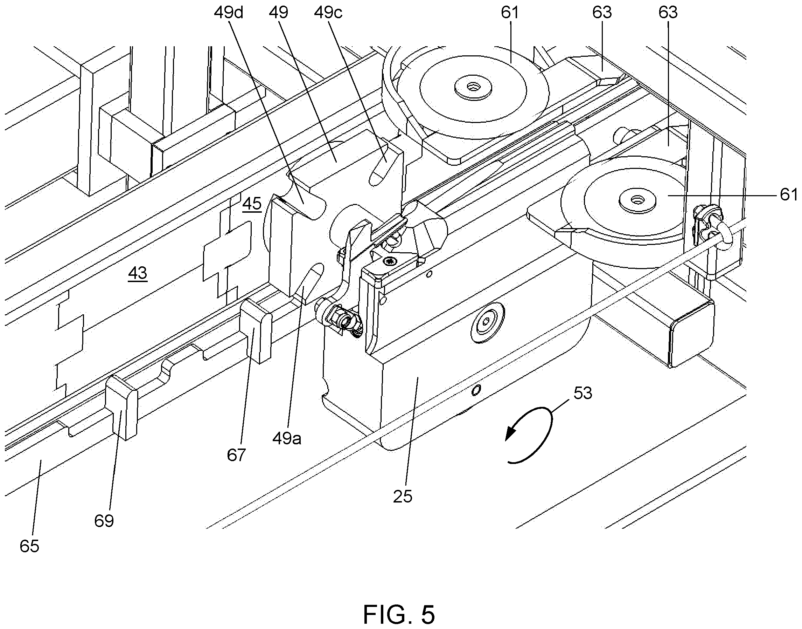

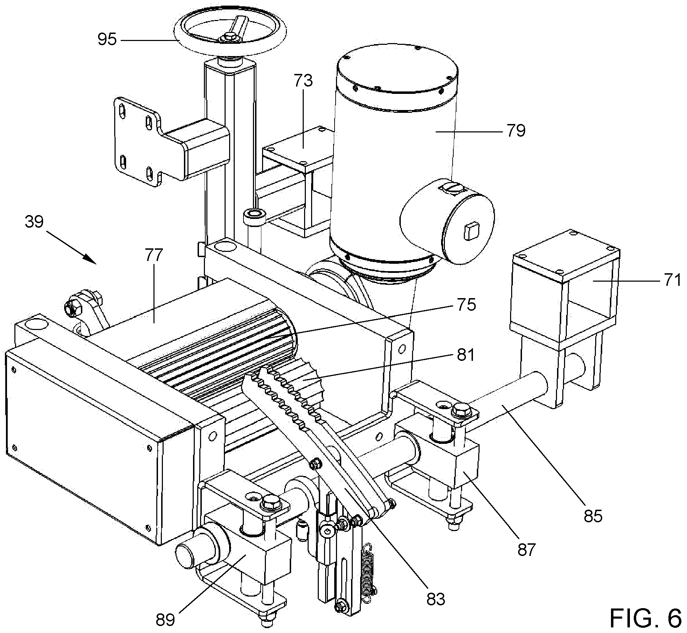

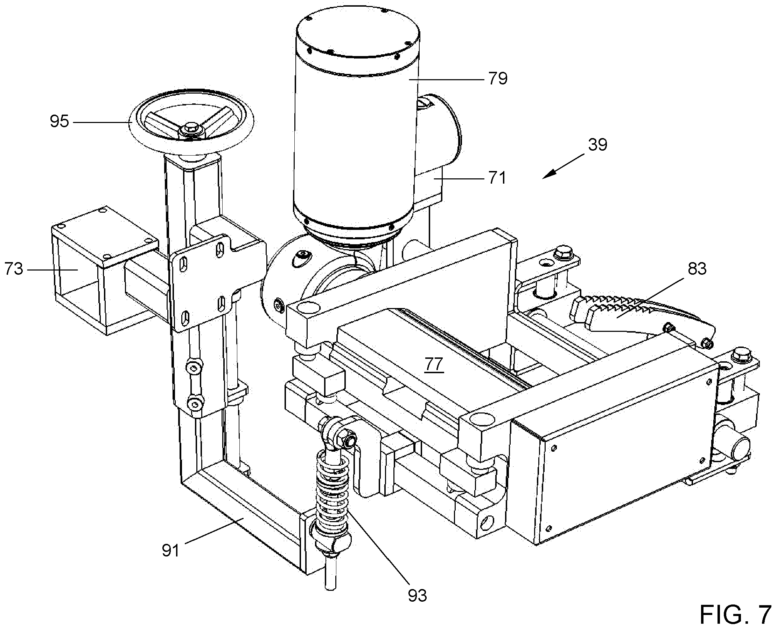

As best shown in Figure 5 the guide channel 65 in recessed portions along the bottom edge thereof is provided with a first detent 67 and second detent 69. The first and second detents 67, 69 are successively engaged by one of slots 49a, 49b, 49c or 49d of the Maltese cross 49, resulting in the mandrel 25 to turn through 180° in the direction of arrow 53 and in its plane of symmetry. In this position the mandrel 25 is upside-down with the breast cap loaded on the mandrel being advanced with its tail end leading and its neck end trailing. After being turned by the first and second detents 67, 69 the mandrels are moving over the de-skinner 39, shown in Figure 2 and in more detail in Figures 6 and 7.

Figure 6 shows the de-skinner 39 detached form the machine from an upstream point of view and Figure 7 shows the de-skinner 39 detached from the machine from a downstream point of view. The de-skinner 39 is built as a unit that can be attached to the main body 13 of the machine 1 by mounting consoles 71, 73. The de-skinner 39 has a gripper roller 75 driven to rotate in close proximity to a knife blade 77. Between the gripper roller 75 and the knife blade 77 a gap is formed for grasping the skin from the breast cap. The gripper roller 75 therefore is provided with axially extending serrations about its outer perimeter surface. The gripper roller 75 is driven by a motor unit 79 so that its surface speed in the direction of the knife blade 77 preferably exceeds the speed of the conveyor 23. For cleaning remaining skin and/or fat from the gripper roller 75, a cleaning roller 81 is driven by motor unit 79 in the same direction of rotation. The opposite confronting surfaces of the gripper roller 75 and the cleaning roller 81 thereby move in opposite directions. The cleaning roller 81 is preferably arranged to be driven at a higher speed than the gripper roller 75. The cleaning roller 81 is also provided with axially extending serrations on its outer surface, which are generally coarser than those of the gripper roller 75.

The de-skinner 39 is height and angularly adjustable with respect to its mounting consoles 71, 73 for optimal de-skinning and to be bypassed when breast caps are processed that have already been de-skinned in advance or need not be de-skinned. At the upstream infeed end of the de-skinner 39 a guide cam 83 is adjustably positioned to guide the tail skin into the gap between the gripper roller 75 and the knife blade 77. The de-skinner 39 is pivotally mounted about a shaft 85, connected to the mounting console 71, through adjustable sleeves 87, 89. A downstream end of the de-skinner 39 is adjustable for elevation and for being bypassed through a telescoping arm 91 that supports a downstream end of the de-skinner 39 through a compression spring 93. The telescoping arm 91 is vertically adjustable in respect of the mounting console 73 by means of a hand wheel 95.

As best seen in Figure 2, there is provided a further pair of detents 96 downstream of the de-skinner 39. This further pair of detents 96 positioned again along the bottom edge of the guide channel 65 successively engages two of the diagonal slots 49a-49d to turn a passing mandrel 25 again through 180° to bring it back in its upside position. The further progress along the conveyor path is again with the neck end of the breast cap leading and the tail end trailing.

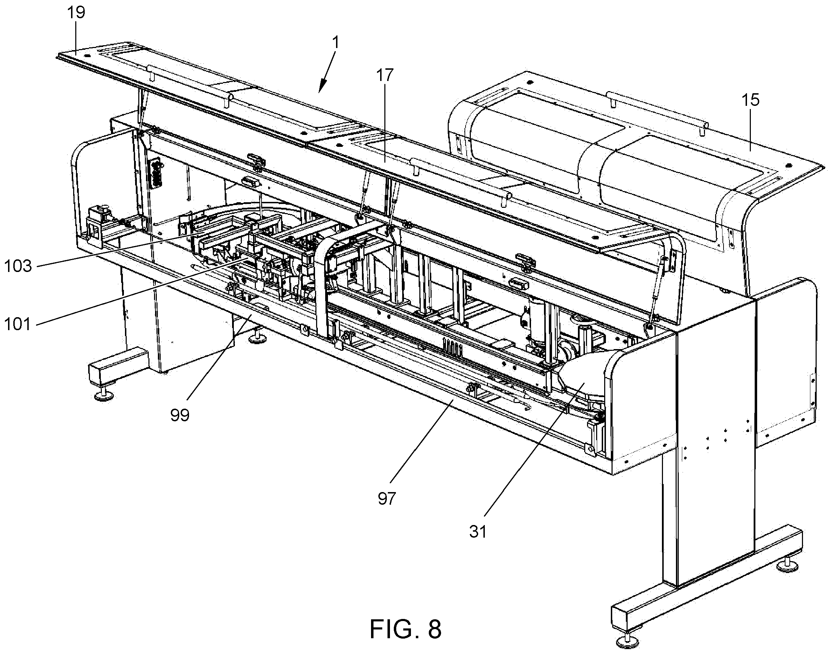

In Figure 8 a perspective view of a reverse side of the machine 1 with opened first and second rear doors 17, 19 is shown. The first rear door 17 opens up a first rear bay in the form of second compartment 97, which may be occupied by optional, preferably modular and exchangeable, equipment for harvesting inner fillets, also called tenders. In the presently described embodiment this second compartment 97 is not used, but it adds to the versatility of the machine that the number and arrangement of meat processing units can be altered for different purposes. The second rear door 19 provides access to a second rear bay in the form of third compartment 99, which accommodates a breast splitter and deboner unit 101. Downstream of the breast splitter and deboner unit 101 there is positioned a carcass unloader 103.

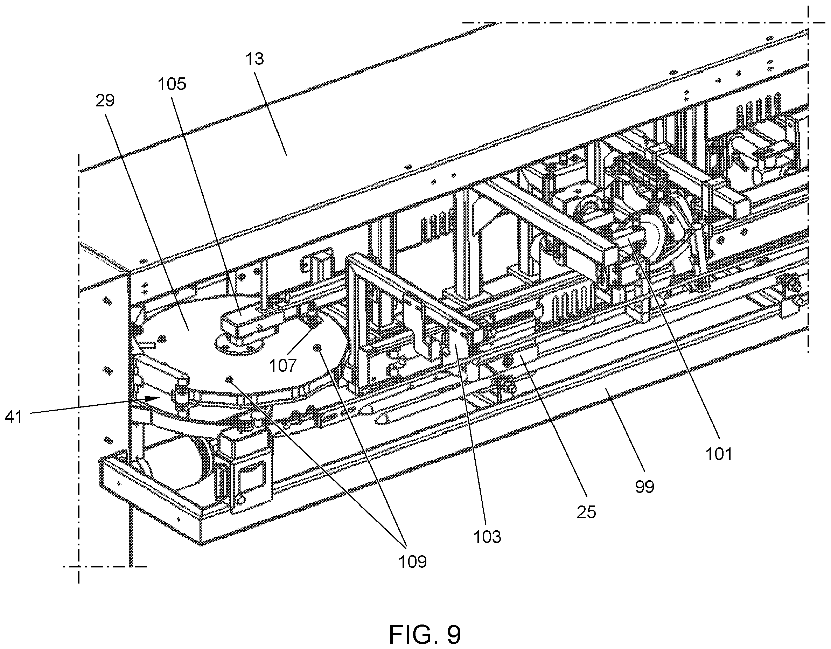

Figure 9 is an enlarged detail view of the third compartment 99 showing the breast splitter and deboner unit 101 and carcass unloader 103 upstream of the driven conveyor wheel 29. The driven conveyor wheel 29 is associated with an encoder 105 and an index reference sensor 107. The index reference sensor 107 cooperates with position indicia 109 provided on the driven conveyor wheel 29. Signals from the encoder 105 and the index reference sensor 107 are fed to a central control unit for control and surveillance of the machine operation.

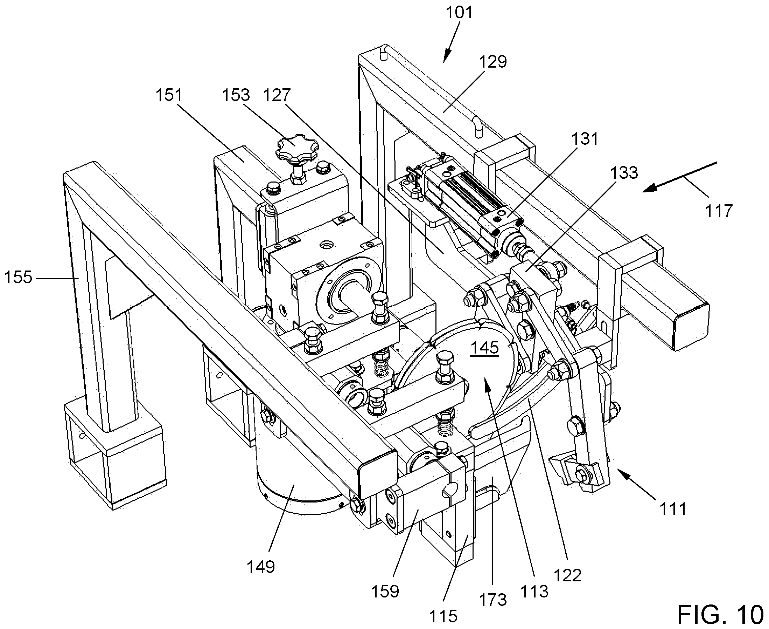

Figure 10 shows the breast splitter and deboner unit 101 as a subassembly detached from the machine. The breast splitter and deboner unit 101 includes a bone centering device 111, a breast cutter 113, and a breast fillet remover 115 arranged in an upstream to downstream direction 117. These individual devices are positioned to split and debone an entire breast cap.

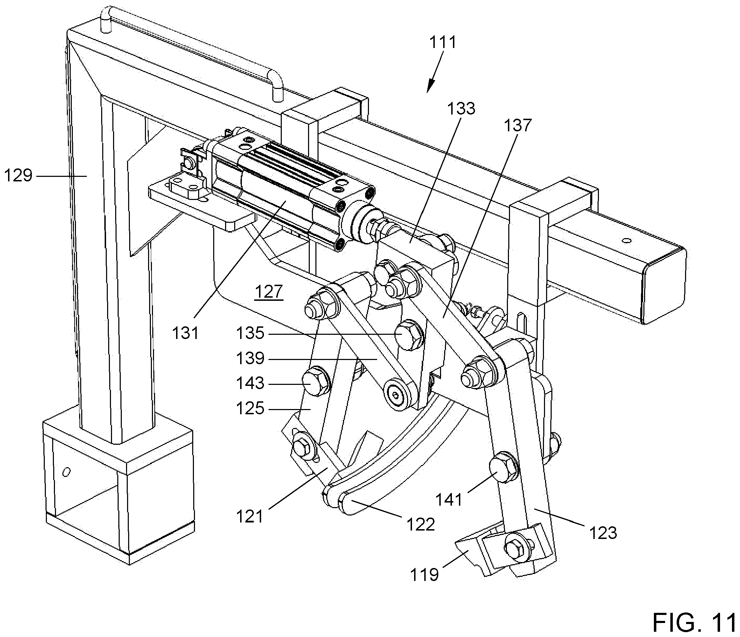

Figure 11 in isolation shows the bone centering device 111, which accomplishes centering of the wishbone in the breast cap to properly guide the breast cap into the breast cutter 113 and the breast fillet remover 115. To this end the bone centering device 111, includes a pair of opposite centering blocks 119, 121 adjustably mounted on first and second pivoting arms 123, 125. The centering blocks 119, 121 are positioned underneath and on opposite sides of a stationary central guide 122. The central guide 122 guides the breast caps in a vertical direction into the breast cutter 113. The pivoting arms 123, 125 are pivotally mounted on carrier subframe 127, while the carrier subframe 127 is adjustably attached to a detachable outrigger 129 that mounts to the machine frame of the main body 13 as shown in Figures 8 and 9. Also mounted on the carrier subframe 127 is a pneumatic actuator cylinder 131 that moves a rocker 133 that is pivoted centrally about a pivot journal 135 on the carrier subframe 127. A first connector link 137 is pivoted to an upper end of the rocker 133 and pivotally connects to an upper end of the first pivoting arm 123. A second connector link 139 is pivoted to a lower end of the rocker 133 and pivotally connects to an upper end of the second pivoting arm 125. With the first and second pivoting arms 123, 125 pivoted in their amidst about pivot shafts 141, 143, operation of the pneumatic actuator 131 will move the centering blocks 119, 121 towards and away from one another. The default position is for the centering blocks 119, 121 to be positioned close to one another, while the pneumatic actuator 131 is operated to move the centering blocks 119, 121 apart to allow the mandrel 25 and breast cap thereon to pass; after the wishbone has been centered. The vertical and horizontal position of the carrier subframe 127 can be adjusted by conventional means. Also the position of the actuator cylinder 131 can be adjusted with respect to the carrier subframe 127 to adjust the closing gap between the opposite centering blocks 119, 121, when underneath the stationary central guide 122.

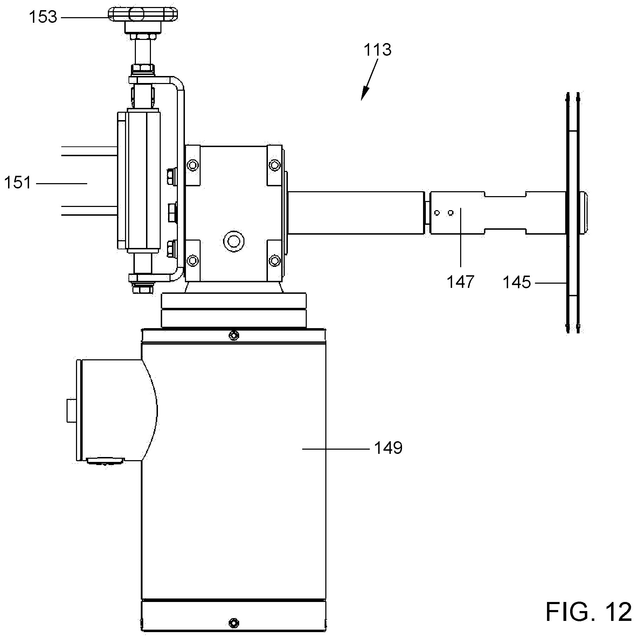

Figure 12 is a downstream elevation of the breast cutter 113. The breast cutter 113 is provided with a double circular cutting blade 145 mounted on a shaft 147. The shaft 147 is driven by a motor drive unit 149 which is adjustably suspended from an outrigger 151, which mounts to the machine frame as shown in Figures 8 and 9. A knurled wheel 153 is provided for adjusting the vertical position of the double cutting blade 145. Such a vertical adjustment may be necessary to adjust the cutting depth and also to compensate for wear after the cutting blade 145 has been re-sharpened. The exact position of the double cutting blade 145 in a horizontal direction is adjustable by varying the extent of the shaft 147 to center the cutting blade 145 with respect to the conveying path of the mandrels 25.

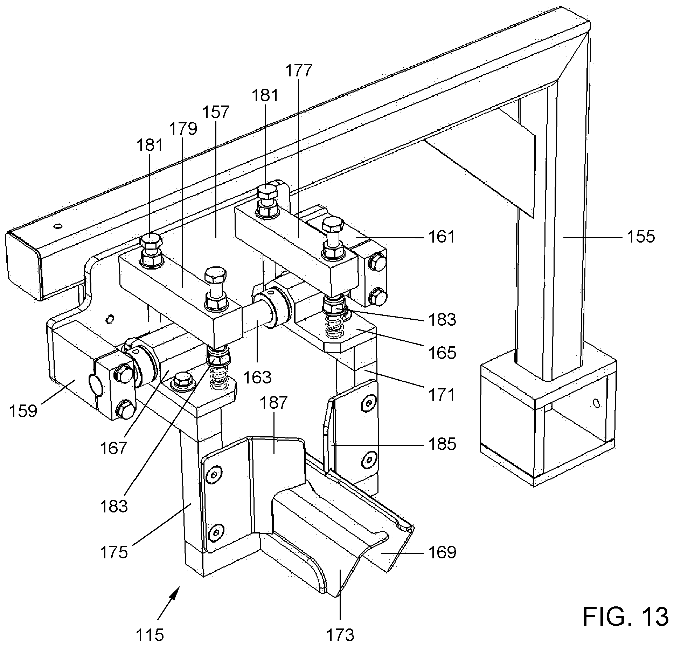

Figure 13 shows the breast fillet remover 115 from an upstream direction. The breast fillet remover 115 is again mounted to the machine frame through an outrigger 155. The outrigger 155 adjustably carries a carrier plate 157 with first and second rocker shaft supports 159, 161 on opposite lateral ends of the carrier plate 157. A rocker shaft 163 extending between the first and second rocker shaft supports 159, 161 carries first and second pivoting sleeved 165, 167. The first pivoting sleeve 165 carries a first tunnel plate 169 from an arm 171 and the second pivoting sleeve 167 carries a second tunnel plate 173 from a corresponding arm 175. Further affixed to the carrier plate 157 are a first end stop holder 177 and a second end stop holder 179. Both the first and second end stop holders 177, 179 have an extend perpendicular to the carrier plate 157 and parallel to the first and second rocker shaft supports 159, 161. Each of the first and second end stop holders 177, 179 has an adjustable swivel stop 181 for the respective first and second pivoting sleeve 165, 167. Adjacent a free end thereof the first and second end stop holders 177,179 are each provided with spring tension adjusters 183. The above described arrangement allows for limited spring biased swiveling of the first and second tunnel plates 169, 173 independently of each other. It is further seen in Figure 13 that the first and second tunnel plates 169, 173 at a downstream end terminate in respective first and second fillet spreaders 185, 187.

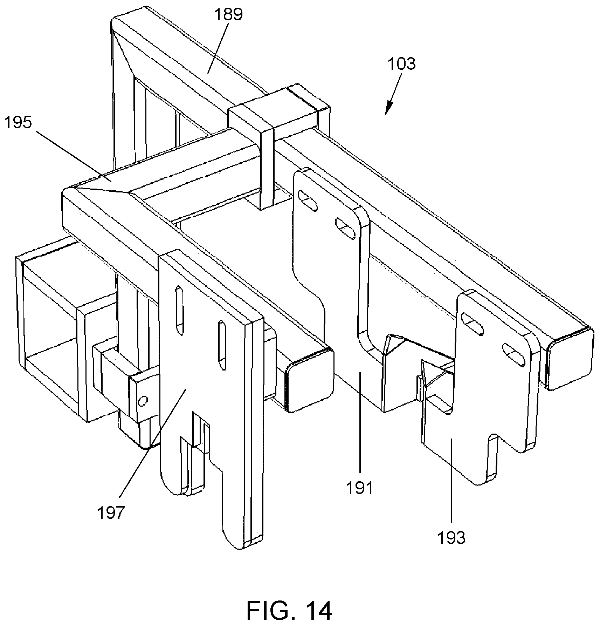

Figure 14 shows the carcass unloader 103 detached from the machine and viewed from a downstream end thereof. A first outrigger 189 serves to mount first and second lifting unloaders 191, 193 to the machine to be in register with the path through which the mandrels 25 are conveyed. A second outrigger 195 is adjustably attached to the first outrigger 189 and mounts a secondary soft unloader 197 in respect of the first and second lifting unloaders 191, 193.

Accordingly a method and system is described for automatically deboning poultry breast caps containing meat and a skeletal structure to obtain breast fillets. The method includes providing a mandrel 25 with a plane of symmetry in a vertical orientation and supporting a breast cap having a neck end and a tail end with its skeletal structure including a keel bone on top of the mandrel 25. The breast cap being held to the mandrel 25 with the keel bone aligned with the plane of symmetry. By moving the mandrel 25 through a conveying path extending through a substantially horizontal plane in a direction of travel 27 it passes a cutting implement 145 of a breast cutter 113 engaging the meat along the keel bone. The cutting implement 145 causes at least one incision along the area where the meat is attached to the keel bone and a breast fillet remover 115 downstream of the breast cutter 113 engages between the skeletal structure and the meat and separates the meat as a pair of single fillets from the skeletal structure. The arrangement is such that the mandrel 25 moves through the conveying path with the plane of symmetry aligned with the direction of travel 27.

It is thus believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the scope of the invention, as is determined by the claims.

## Claims

1. Method of automatically deboning poultry breast caps containing meat and a skeletal structure to obtain breast fillets therefrom, including:
providing a mandrel (25) having a plane of symmetry in vertical orientation;
supporting a breast cap having a neck end and a tail end with its skeletal structure including a keel bone on top of the mandrel (25);
holding the breast cap to the mandrel (25) with the keel bone aligned with the plane of symmetry of the mandrel;
moving the mandrel (25) through a conveying path that extends through a substantially horizontal plane;
providing a breast cutter (113) in the conveying path;
moving the mandrel (25) through a conveying path in a direction of travel (27) to pass the breast cutter (113) for engagement with the meat along the keel bone;
causing at least one incision to be provided along the area where the meat is attached to the keel bone;
providing a breast fillet remover (115) downstream of the breast cutter (113);
allowing the breast fillet remover to engage between the skeletal structure on the mandrel and the meat; and
separating the meat as a pair of single fillets from the skeletal structure,
wherein the mandrel (25) is being moved through the conveying path with the plane of symmetry aligned with the direction of travel (27),
**characterized in that** the mandrel (25) is moved through the conveying path with the neck end of the breast cap leading and the tail end trailing, and **in that** for enabling an optional step of de-skinning prior to moving the mandrel (25) to pass the breast cutter (113), the mandrel within its plane of symmetry is brought into an upside-down position with the tail end of the breast cap leading for the optional step of de-skinning and is returned back again to its initial position prior to engagement of the meat with the breast cutter (113).

2. Method according to claim 1, further including providing a de-skinner (39), and performing of the optional step of de-skinning.

3. Method according to claim 2, further including a step of pre-cutting the neck end prior to the step of de-skinning.

4. Method according to one of claims 1 to 3, further comprising unloading the skeletal structure from the mandrel (25) after separating of the meat therefrom.

5. Method according to one of claims 1 to 4, wherein the breast cutter (113) includes a pair of spaced parallel cutting blades (145) for providing a pair of spaced parallel incisions along the area where the meat is attached to the keel bone.

6. System for performing a method of automatically deboning poultry breast caps containing meat and a skeletal structure to obtain breast fillets therefrom, including:
a mandrel (25) having a plane of symmetry in vertical orientation for supporting a breast cap having a neck end and a tail end with its skeletal structure including a keel bone on top of the mandrel (25) with the keel bone aligned with the plane of symmetry of the mandrel;
a conveyor (23) for moving the mandrel (25) through a conveying path that extends through a substantially horizontal plane in a direction of travel (27);
a breast cutter (113) in the conveying path for engagement with the meat along the keel bone for making at least one incision along an area where the meat is attached to the keel bone; and
a breast fillet remover (115) downstream of the breast cutter (113) to engage between the skeletal structure on the mandrel and the meat for separating the meat as a pair of single fillets from the skeletal structure,
wherein the mandrel (25) is arranged for being moved through the conveying path with the plane of symmetry aligned with the direction of travel (27),
**characterized in that** the mandrel (25) is further arranged to be moved through the conveying path with the neck end of a breast cap leading and the tail end trailing, and **in that** for enabling an optional step of de-skinning prior to moving the mandrel (25) to pass the breast cutter (113), the mandrel within its plane of symmetry is arranged to be brought into an upside-down position with the tail end of the breast cap leading for the optional step of de-skinning and is arranged to be returned back again to its initial position prior to engagement of the meat with the breast cutter (113).

7. System according to claim 6, wherein the conveyor is an endless conveyor (23) including a pair of substantially parallel straight sections, which are joined by opposite first and second curved sections extending about spaced first and second conveyor wheels (29, 31).

8. System according to claim 7, comprising a conveyor chain and a plurality of mandrels entrained for movement through the conveying path in the direction of travel by the conveyor chain (41).

9. System according to claim 8, wherein the conveyor chain (41) includes individual chain links (43, 45, 47) and each mandrel (25) being associated with an intermediate chain link (45), between a leading chain link (43) and a trailing chain link (47).

10. System according to claim 9, wherein each intermediate chain link (45) supports a Maltese cross (49) arranged to be rotatable in a vertical plane between at least two indexed positions.

11. System according to claim 10, wherein the mandrel (25) is fixedly connected to the Maltese cross (49) by a shaft (51) to extend with its plane of symmetry parallel to the plane of rotation of the Maltese cross.

12. System according to claim 10 or 11, wherein inwardly extending diagonal slots (49a-d) in the Maltese cross (49) are adapted to engage detents (67, 69, 96) along a bottom edge of a guide channel (65) for guiding and supporting the conveyor chain in a straight section of the conveyor, and wherein engagement of the detents and the diagonal slots causes each mandrel to turn through 180o in its plane of symmetry.

13. System according to one of claims 6 to 12, comprising a loading section for loading poultry breast caps onto mandrels (25) and at least two compartments (33, 97, 99) each adapted to selectively receive at least one exchangeable meat processing module (39, 101, 103).

14. System according to claim 13, wherein the at least one exchangeable meat processing module includes a breast splitter and deboner unit (101).

15. System according to claim 14, wherein the at least one exchangeable meat processing module further includes a de-skinner unit (39), arranged to be received in one of the at least two compartments in optional operative and non-operative modes.

16. System according to claim 14 or 15, wherein the deboner unit in the direction of travel includes a bone centering device (111), the breast cutter (113), and the breast fillet remover (115).

17. System according to claim 16, wherein the bone centering device (111) comprises a stationary central guide (122) for guiding breast caps in a vertical direction and a pair of centering blocks (119) oppositely movable transverse to the direction of travel (27, 117) for centering wishbones in the breast caps.

18. System according to claim 16 or 17, wherein the breast cutter (113) includes a cutting implement (145) adapted to cause in use at least one incision along the area where the meat is attached to the keel bone.

19. System according to claim 18, wherein the cutting implement (145) is in the form of a rotatable double circular cutting blade.

20. System according to one of claims 16 to 19, wherein the breast fillet remover (115) includes complementary first and second tunnel plates (169, 173) mounted for limited individual swiveling movement.

## Patentansprüche

1. Verfahren zum automatischen Entbeinen von Geflügelbrustkappen mit Fleisch und einer Skelettstruktur zur Gewinnung von Brustfilets daraus, umfassend:.
das Bereitstellen eines Dorns (25) mit einer Symmetrieebene in vertikaler Ausrichtung;
das Stützen einer Brustkappe mit einem Halsende und einem Schwanzende mit ihrer Skelettstruktur, einschließlich eines Brustbeins, oben auf dem Dorn (25);
das Halten der Brustkappe an den Dorn (25), mit dem Brustbein ausgerichtet mit der Symmetrieebene des Dorns;
das Bewegen des Dorns (25) durch eine Förderbahn, die durch eine im Wesentlichen horizontale Ebene verläuft;
das Bereitstellen eines Brustschneiders (113) in der Förderbahn;
das Bewegen des Dorns (25) durch eine Förderbahn in einer Laufrichtung (27) zum Passieren des Brustschneiders (113), um das Fleisch entlang des Brustbeins zu ergreifen;
das Herbeiführen von mindestens einem Einschnitt, bereitzustellen entlang des Bereichs, wo das Fleisch am Brustbein befestigt ist;
das Bereitstellen eines Brustfiletentferners (115) stromabwärts von dem Brustschneider (113);
das Ermöglichen des Eingreifens des Brustfiletentferners zwischen der Skelettstruktur auf dem Dorn und dem Fleisch; und
das Trennen des Fleisches als ein Paar einzelne Filets von der Skelettstruktur, wobei der Dorn (25) durch die Förderebene bewegt wird, mit der Symmetrieebene ausgerichtet mit der Laufrichtung (27);
**dadurch gekennzeichnet, dass** der Dorn (25) mit dem Halsende der Brustkappe voran und dem Schwanzende nachlaufend durch die Förderbahn bewegt wird, und dass, um vor dem Bewegen des Dorns (25) zum Passieren des Brustschneiders (113) einen optionalen Schritt zum Enthäuten zu ermöglichen, der Dorn in seiner Symmetrieebene in eine kopfstehende Position gebracht wird, mit dem Schwanzende der Brustkappe voran für den optionalen Schritt der Enthäutung, und vor dem Ergreifen des Fleisches mit dem Brustschneider (113) wieder zurück in seine Ausgangsposition gebracht wird.

2. Verfahren nach Anspruch 1, ferner umfassend das Bereitstellen eines Enthäuters (39) und das Durchführen des optionalen Schritts der Enthäutung.

3. Verfahren nach Anspruch 2, ferner umfassend einen Schritt des Vorschneidens des Halsendes vor dem Schritt der Enthäutung.

4. Verfahren nach einem der Schritte 1 bis 3, ferner umfassend das Entladen der Skelettstruktur von dem Dorn (25), nachdem das Fleisch davon entfernt wurde.

5. Verfahren nach einem der Ansprüche 1 bis 4, wobei der Brustschneider (113) ein Paar beabstandete parallele Schneidemesser (145) umfasst, um ein Paar beabstandete parallele Einschnitte entlang des Bereichs, wo das Fleisch an dem Brustbein befestigt ist, bereitzustellen.

6. System zur Durchführung eines Verfahrens des automatischen Entbeinens von Geflügelbrustkappen mit Fleisch und einer Skelettstruktur zur Gewinnung von Brustfilets daraus, umfassend:
einen Dorn (25) mit einer Symmetrieebene in vertikaler Ausrichtung zum Stützen einer Brustkappe mit einem Hals- und einem Schwanzende mit ihrer Skelettstruktur, einschließlich eines Brustbeins, oben auf dem Dorn (25), mit dem Brustbein ausgerichtet mit der Symmetrieebene des Dorns;
einen Förderer (23) zum Bewegen des Dorns (25) durch eine Förderbahn, die durch eine im Wesentlichen horizontale Ebene in einer Laufrichtung (27) verläuft;
einen Brustschneider (113) in der Förderbahn zum Ergreifen des Fleisches entlang des Brustbeins, um mindestens einen Einschnitt entlang eines Bereiches, wo das Fleisch an dem Brustbein befestigt ist, zu machen; und
einen Brustfiletentferner (115) stromabwärts von dem Brustschneider (113) zum Eingreifen zwischen der Skelettstruktur auf dem Dorn und dem Fleisch, um das Fleisch als ein Paar einzelne Filets von der Skelettstruktur zu trennen, wobei der Dorn (25) angeordnet ist, um durch die Förderbahn mit der Symmetrieebene ausgerichtet mit der Laufrichtung (27) bewegt zu werden,
**dadurch gekennzeichnet, dass** der Dorn (25) ferner angeordnet ist, um mit dem Halsende einer Brustkappe voran und dem Schwanzende nachlaufend durch die Förderebene zu bewegen, und dass, um vor dem Schritt dem Bewegen des Dorns (25) zum Passieren des Brustschneiders (113) einen optionalen Schritt der Enthäutung zu ermöglichen, der Dorn in seiner Symmetrieebene angeordnet ist, um in eine kopfstehende Position gebracht zu werden, mit dem Schwanzende der Brustkappe voran für den optionalen Schritt des Enthäutens, und angeordnet ist, um vor dem Ergreifen des Fleisches mit dem Brustschneider (113) wieder zurück in seine Ausgangsposition gebracht zu werden.

7. System nach Anspruch 6, wobei der Förderer ein Endlosförderer (23) ist, einschließlich eines Paares von im Wesentlichen parallelen geraden Abschnitten, die verbunden sind durch gegenüberliegende erste und zweite gebogene Abschnitte, verlaufend um beabstandete erste und zweite Förderräder (29, 31) herum.

8. System nach Anspruch 7, umfassend eine Förderkette und eine Vielzahl von Dornen, mitgenommen zur Bewegung durch die Förderbahn in der Laufrichtung durch die Förderkette (41).

9. System nach Anspruch 8, wobei die Förderkette (41) einzelne Kettenglieder (43, 45, 47) umfasst und jeder Dorn (25) mit einem Zwischenkettenglied (45) zwischen einem vorlaufenden Kettenglied (43) und einem nachlaufenden Kettenglied (47) verbunden ist.

10. System nach Anspruch 9, wobei jedes Zwischenkettenglied (45) ein Malteserkreuz (49) stützt, angeordnet um drehbar in einer vertikalen Ebene zwischen mindestens zwei indexierten Positionen zu sein.

11. System nach Anspruch 10, wobei der Dorn (25) durch eine Welle (51) fest mit dem Malteserkreuz (49) verbunden ist, um mit seiner Symmetrieebene parallel zu der Drehebene des Malteserkreuzes zu verlaufen.

12. System nach Anspruch 10 oder 11, wobei nach innen verlaufende diagonale Schlitze (49a-d) in dem Malteserkreuz (49) geeignet sind zum Eingreifen in Arretierungen (67, 69, 96) entlang einer Unterkante eines Führungskanals (65) zum Führen und Stützen der Förderkette in einem geraden Abschnitt des Förderers, und wobei das Eingreifen in die Arretierungen und die diagonalen Schlitze jeden Dorn veranlasst, sich durch 180° in seiner Symmetrieebene zu drehen.

13. System nach einem der Ansprüche 6 bis 12, umfassend einen Ladeabschnitt zum Laden von Geflügelbrustkappen auf Dorne (25) und mindestens zwei Abteile (33, 97, 99), jeweils geeignet zum selektiven Aufnehmen von mindestens einem austauschbaren Fleischverarbeitungsmodul (39, 101, 103).

14. System nach Anspruch 13, wobei das mindestens eine austauschbare Fleischverarbeitungsmodul eine Brustteilungs- und Entbeinungseinheit (101) umfasst.

15. System nach Anspruch 14, wobei das mindestens eine austauschbare Fleischverarbeitungsmodul ferner eine Enthäutungseinheit (39) umfasst, angeordnet um in eines der mindestens zwei Abteile in betriebsfähigen und nicht betriebsfähigen Modi aufgenommen zu werden.

16. System nach Anspruch 14 oder 15, wobei die Entbeinungseinheit in der Laufrichtung eine Knochenzentriereinheit (111), den Brustschneider (113) und den Brustfiletentferner (115) umfasst.

17. System nach Anspruch 16, wobei die Knochenzentriervorrichtung (111) eine ortsfeste Mittenführung (122) zum Führen von Brustkappen in einer vertikalen Laufrichtung und ein Paar entgegengesetzt quer zu der Laufrichtung (27, 117) bewegliche Zentrierblöcke (119) umfasst, um Gabelbeine in den Brustkappen zu zentrieren.

18. System nach Anspruch 16 oder 17, wobei der Brustschneider (113) ein Schneidewerkzeug (145) umfasst, geeignet um bei Verwendung mindestens einen Einschnitt entlang des Bereiches, wo das Fleisch an dem Brustbein befestigt ist, herbeizuführen.

19. System nach Anspruch 18, wobei das Schneidewerkzeug (145) die Form eines drehbaren kreisförmigen Doppelschneidemessers hat.

20. System nach einem der Ansprüche 16 bis 19, wobei der Brustfiletentferner (115) komplementäre erste und zweite Tunnelplatten (169, 173) umfasst, montiert für begrenzte einzelne Schwenkbewegungen.

## Revendications

1. Procédé pour désosser automatiquement des coffres de volaille contenant de la viande et une structure squelettique pour en obtenir des filets de poitrine, comprenant les étapes consistant à :
prévoir un mandrin (25) ayant un plan de symétrie en orientation verticale ;
supporter un coffre ayant une extrémité de cou et une extrémité de queue avec sa structure squelettique comprenant un bréchet sur la partie supérieure du mandrin (25) ;
maintenir le coffre sur le mandrin (25) avec le bréchet aligné avec le plan de symétrie du mandrin ;
déplacer le mandrin (25) sur une trajectoire de transport qui s'étend à travers un plan sensiblement horizontal ;
prévoir un dispositif de coupe de poitrine (113) dans la trajectoire de transport ;
déplacer le mandrin (25) sur une trajectoire de transport dans une direction de déplacement (27) pour faire passer le dispositif de coupe de poitrine (113) en mise en prise avec la viande le long du bréchet ;
prévoir au moins une incision le long de la zone où la viande est fixée au bréchet ;
prévoir un extracteur de filet (115) en aval du dispositif de coupe de poitrine (113) ;
permettre à l'extracteur de filet de se mettre en prise entre la structure squelettique sur le mandrin et la viande ; et
séparer la viande sous la forme d'une paire de filets uniques de la structure squelettique,
dans lequel le mandrin (25) est déplacé sur la trajectoire de transport avec le plan de symétrie aligné avec la direction de déplacement (27),
**caractérisé en ce que** le mandrin (25) est déplacé sur la trajectoire de transport avec l'extrémité de cou du coffre en position d'attaque et l'extrémité de queue en position de fuite, et pour permettre une étape supplémentaire de dépouillement avant de déplacer le mandrin (25) pour faire passer le dispositif de coupe de poitrine (113), le mandrin dans son plan de symétrie est amené dans une position retournée avec l'extrémité d'attaque de queue du coffre pour l'étape facultative de dépouillement et est ramené dans sa position initiale avant la mise en prise de la viande avec le dispositif de coupe de poitrine (113).

2. Procédé selon la revendication 1, comprenant en outre les étapes consistant à prévoir un dépouilleur (39), et réaliser l'étape facultative de dépouillement.

3. Procédé selon la revendication 2, comprenant en outre une étape de pré-coupe de l'extrémité de cou avant l'étape de dépouillement.

4. Procédé selon l'une des revendications 1 à 3, comprenant le déchargement de la structure squelettique du mandrin (25) après avoir séparé la viande.

5. Procédé selon l'une des revendications 1 à 4, dans lequel le dispositif de coupe de poitrine (113) comprend une paire de lames de coupe (145) parallèles espacées pour fournir une paire d'incisions parallèles espacées le long de la zone où la viande est fixée sur le bréchet.

6. Système pour réaliser un procédé de désossage automatique de coffres de volaille contenant de la viande et une structure squelettique pour en obtenir des filets de poitrine, comprenant :
un mandrin (25) ayant un plan de symétrie en orientation verticale pour supporter un coffre ayant une extrémité de cou et une extrémité de queue avec sa structure squelettique comprenant un bréchet sur la partie supérieure du mandrin (25), avec le bréchet aligné avec le plan de symétrie du mandrin ;
un transporteur (23) pour déplacer le mandrin (25) sur une trajectoire de transport qui s'étend sur un plan sensiblement horizontal dans une direction de déplacement (27) ;
un dispositif de coupe de poitrine (113) dans la trajectoire de transport pour la mise en prise avec la viande le long du bréchet pour réaliser au moins une incision le long d'une zone où la viande est fixée au bréchet ; et
un extracteur de filet (115) en aval du dispositif de coupe de poitrine (113) pour se mettre en prise entre la structure squelettique sur le mandrin et la viande pour séparer la viande sous la forme d'une paire de filets uniques de la structure squelettique,
dans lequel le mandrin (25) est agencé pour être déplacé sur la trajectoire de transport avec le plan de symétrie aligné avec la direction de déplacement (27),
**caractérisé en ce que** le mandrin (25) est en outre agencé pour être déplacé sur la trajectoire de transport avec l'extrémité de cou d'un coffre en position d'attaque et l'extrémité de queue en position de fuite et pour permettre une étape facultative de dépouillement avant de déplacer le mandrin (25) pour faire passer le dispositif de coupe de poitrine (113), le mandrin dans son plan de symétrie est agencé pour être amené dans une position retournée avec l'extrémité d'attaque de queue du coffre pour l'étape facultative de dépouillement et est agencé pour être ramené dans sa position initiale avant la mise en prise de la viande avec le dispositif de coupe de poitrine (113).

7. Système selon la revendication 6, dans lequel le transporteur est un transporteur sans fin (23) comprenant une paire de sections droites sensiblement parallèles, qui sont assemblées par des première et seconde sections incurvées opposées s'étendant autour des première et seconde roues de transporteur (29, 31) espacées.

8. Système selon la revendication 7, comprenant une chaîne de transporteur et une pluralité de mandrins entraînés pour le mouvement sur la trajectoire de transport dans la direction de déplacement par la chaîne de transporteur (41).

9. Système selon la revendication 8, dans lequel la chaîne de transporteur (41) comprend des maillons de chaîne (43, 45, 47) individuels et chaque mandrin (25) étant associé avec un maillon de chaîne intermédiaire (45), entre un maillon de chaîne d'attaque (43) et un maillon de chaîne de fuite (47).

10. Système selon la revendication 9, dans lequel chaque maillon de chaîne intermédiaire (45) supporte une croix de Malte (49) agencée pour pouvoir tourner dans un plan vertical entre au moins deux positions indexées.

11. Système selon la revendication 10, dans lequel le mandrin (25) est raccordé, de manière fixe, à la croix de Malte (49) par un arbre (51) afin de s'étendre avec son plan de symétrie parallèle au plan de rotation de la croix de Malte.

12. Système selon la revendication 10 ou 11, dans lequel des fentes diagonales (49a-d) s'étendant vers l'intérieur dans la croix de Malte (49) sont adaptées pour mettre en prise des encliquetages (67, 69, 96) le long d'un bord inférieur d'un canal de guidage (65) pour guider et supporter la chaîne de transporteur dans une section droite du transporteur, et dans lequel la mise en prise des encliquetages et des fentes diagonales amène chaque mandrin à tourner à 180° dans son plan de symétrie.

13. Système selon l'une des revendications 6 à 12, comprenant une section de chargement pour charger les coffres de volaille sur les mandrins (25) et au moins deux compartiments (33, 97, 99) chacun adaptés pour recevoir sélectivement au moins un module de traitement de viande échangeable (39, 101, 103).

14. Système selon la revendication 13, dans lequel le au moins un module de traitement de viande échangeable comprend une unité de division et de désossage de poitrine (101).

15. Système selon la revendication 14, dans lequel le au moins un module de traitement de viande échangeable comprend en outre une unité de dépouillement (39), agencée pour être reçue dans l'un des au moins deux compartiments dans des modes opérationnel et non opérationnel facultatifs.

16. Système selon la revendication 14 ou 15, dans lequel l'unité de désossage dans la direction de déplacement comprend un dispositif de centrage d'os (111), le dispositif de coupe de poitrine (113) et l'extracteur de filet (115).

17. Système selon la revendication 16, dans lequel le dispositif de centrage d'os (111) comprend un guide central fixe (122) pour guider les coffres dans une direction verticale et une paire de blocs de centrage (119) mobiles de manière opposée, transversaux par rapport à la direction de déplacement (27, 117) pour centrer les bréchets dans les coffres.

18. Système selon la revendication 16 ou 17, dans lequel le dispositif de coupe de poitrine (113) comprend un accessoire de coupe (145) adapté pour provoquer, à l'usage, au moins une incision le long de la zone où la viande est fixée au bréchet.

19. Système selon la revendication 18, dans lequel l'accessoire de coupe (145) se présente sous la forme d'une lame de coupe double circulaire rotative.

20. Système selon l'une des revendications 16 à 19, dans lequel l'extracteur de filet (115) comprend des première et seconde plaques de tunnel (169, 173) complémentaires montées pour le mouvement de pivotement individuel limité.
